(19) **Europäisches Patentamt / European Patent Office / Office européen des brevets**

(11) **EP 2 503 359 A1**

(12) **EUROPEAN PATENT APPLICATION**

(43) Date of publication:
**26.09.2012 Bulletin 2012/39**

(51) Int Cl.:
***G01V 3/10*** (2006.01)

(21) Application number: **11275049.2**

(22) Date of filing: **25.03.2011**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems Plc**
**London SW1Y 5AD (GB)**

</td><td>

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

</td></tr>
</table>

(54) **Imaging of Objects**

(57)   A method and apparatus for imaging hidden objects are provided. The apparatus comprises an array of magnetic field inducing elements such as electromagnets in a Halbach array so that the array produces a combined magnetic field resulting from a combination of the element fields. The combined magnetic field is projected from the apparatus into an adjacent space and through a barrier or shield hiding the object. The apparatus includes means to sense a change in magnetic susceptibility of the field caused by the presence of an object in the field. Mapping of the changes in susceptibility onto individual elements in the array enables a visual image of the object to be created.

Fig.3.

## Description

This invention concerns imaging of objects and in particular the imaging of buried or hidden objects based on the penetration of a magnetic field into an inhomogeneous material.

This invention addresses the imaging of buried or hidden objects including the identification of buried or hidden pipes, cables etc. or the identification of foreign bodies in foodstuffs or grain or the segregation of minerals, based on their intrinsic magnetic properties.

In 1973 Mallinson discovered what was considered then to be a 'magnetic curiosity', that of one-sided permanent magnets. Subsequently, this discovery has found many applications including magnetic recording tape, electric motors, particle accelerators, magnetic levitation trains and fridge magnets. A series of magnets which operate as a "one sided magnet" is called a 'Halbach array', after the physicist K. Halbach who investigated the application of the technology to particle accelerators.

Halbach arrays are conventionally made from a juxtaposition of permanent magnets where the magnetisation vector rotates periodically through 90° between adjacent elements of the array. The resultant effect is the cancellation of the magnetic field on one side of the array, and reinforcement on the other.

The rearward fringing field is due to the discontinuity of the magnetisation vector at the boundaries of the elemental permanent magnets comprising the array. This effect can be overcome by using a continuously varying and periodic current sheet rather than discrete permanent magnets. Thus the special magnetic field pattern can result from a current distribution, and not necessarily a distribution of discrete permanent magnets. Moreover, curved (circular) or spherical Halbach arrays have been constructed for specific applications, usually highly efficient electric motors.

According to a first aspect of the invention there is provided imaging apparatus comprising an array of magnetic field inducing elements whereby the array produces a combined magnetic field resulting from a combination of the element fields, the combined magnetic field being projected from the apparatus into a space of a given magnetic susceptibility adjacent the apparatus, the apparatus including means to sense a change in magnetic susceptibility of the field induced by each element whereby to detect an object of differing magnetic susceptibility positioned in the combined magnetic field.

The apparatus preferably comprises a linear Halbach array or a two dimensional Halbach array.

The elements preferably comprise electromagnets and the means to sense the change in magnetic susceptibility of the field induced by each element may therefore comprise means to sense change in the current passing through each electromagnet.

The apparatus preferably includes means, such as a computer with a visual display unit, to combine the sensed changes in magnetic field susceptibility into a visual image representing the object. The means to combine the sensed changes in magnetic field susceptibility into a visual image representing the object preferably includes means to represent the layout of the field inducing elements on a visual display.

The apparatus may include means to vary the strength of magnetic field of each element whereby to vary at least one of the sensitivity of the apparatus and the distance from the apparatus at which the object may be detected. The apparatus can thus sense an object at varying distances from itself to provide a three dimensional image of the object.

According to a second aspect of the invention there is provided a method of detecting an object hidden within or behind a shield, the method including the steps of positioning apparatus according to the first aspect of the invention adjacent the shield whereby to cause the combined magnetic field to penetrate the shield and encompass the object and sensing the change in magnetic susceptibility of the field induced by each element due to the presence of the object, whereby to detect the object.

The invention will now be described by way of example with reference to the accompanying drawings of which:-

> Figure 1 is a schematic view of a linear Halbach array;
>
> Figure 2 shows possible two dimensional pixelated Halbach array configurations;
>
> Figure 3 shows schematically a one sided magnetic field from a linear Halbach array coupling to a buried magnetically susceptible object of square cross section;
>
> Figure 4 shows computed difference in field strength due to susceptibility change owing to the presence of the square object shown in Figure 3, and
>
> Figure 5 shows a linear Halbach array according to the invention coupled to an oscilloscope for imaging an object.

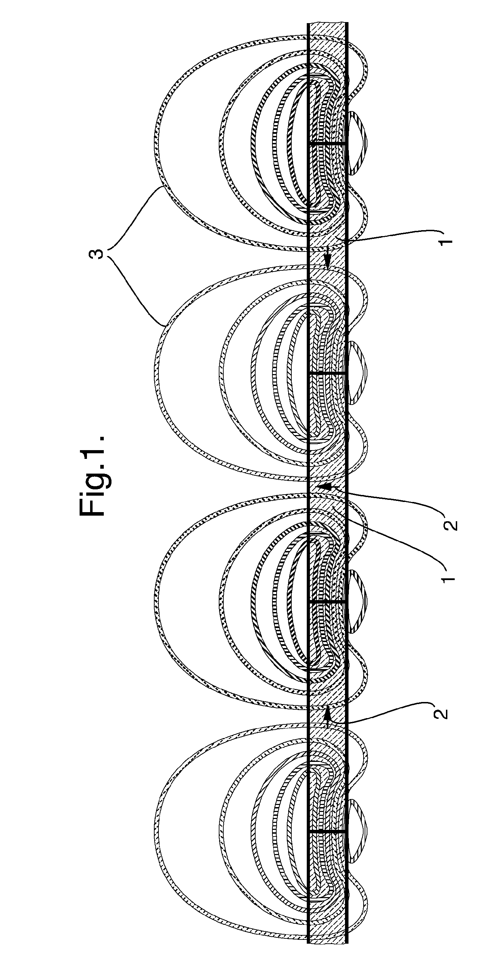

In Figure 1 a linear Halbach array of magnetic field-inducing elements 1 is shown with magnetisation vectors 2 shown alternately at right angles, along the array. The substantially one sided magnetic fields 3 induced by each element are apparent.

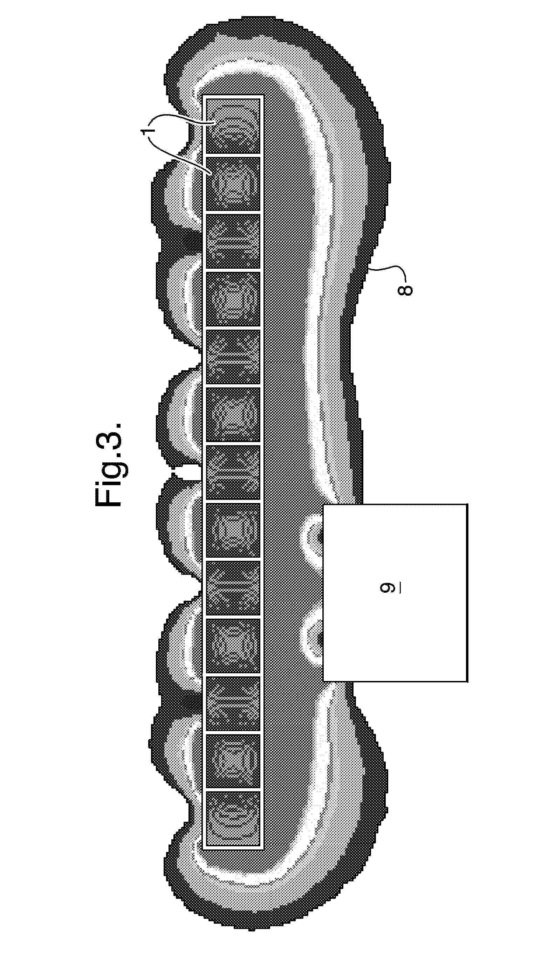

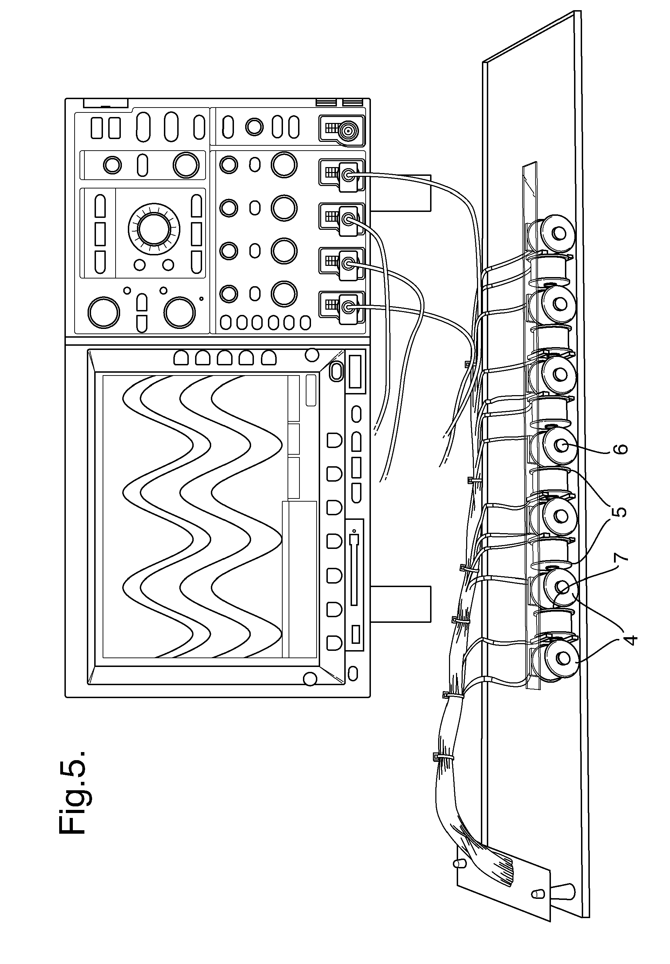

One embodiment of the invention concerns a Halbach array composed of a linear set of solenoidal electromagnets 4, 5, having their cores 6, 7 and thus respective magnetic vectors, mutually at right angles to each other, as shown in Figure 5. Here the magnetic fields are due to the flow of electric current in the electromagnets. The resulting field 8 from the electromagnets, as shown in Figure 3, effectively reproduces that of the permanent magnets in a classical Halbach array but the field and current from each electromagnet or array element is independently controllable and measurable by means of a computer (not shown).

The one-sided and enhanced magnetic field 8 produced from the array is moved over a magnetically penetrable material (not shown) forming the shield or barrier. Buried in the material is an object 9, as shown in Figure 3, of different magnetic susceptibility $\chi$, where the magnetisation (**M**) and susceptibility of the object are defined by **M**=$\chi$**B** . The magnetic field from the Halbach array interacts with the buried object.

The interaction of the magnetic field with the buried object has two related effects. Firstly, the force F felt by the buried object 9 is dependent on the field strength and is given by

$$ \mathrm{F}_i = \frac{\partial}{\partial x_j}\left\{ \mathrm{T}_{ij} \right\} $$

where $T_{ij}$ is the stress tensor which, for a purely magnetic field takes the form,

$$ \mathrm{T}_{ij} = \frac{1}{\mu_0}\left( \mathrm{B}_i \mathrm{B}_j - \frac{1}{2}\delta_{ij}\mathrm{B}^2 \right) $$

The first term shows there is a magnetic stress, or reaction, that is communicated back to the magnetic source (as opposed to a magnetic pressure from the second term). Therefore, the buried object conveys its presence back to the magnetic element, or array pixel, as a differential force - differentiated both in being localised to the object, by virtue of the change in susceptibility, and localised to the magnetic pixel group mapped to the object.

Secondly, the change in susceptibility due to the presence of the object produces a variation in the field strength at the source, i.e. the magnetic element or pixel, the magnetic variation being transmitted via the stress tensor. However, the variation of the current ($\delta i$) in the source magnetic element arising from the variation in field strength ($\delta B$) is such that, $\delta i \propto \delta B$

Therefore a means of mapping, or imaging, the object by monitoring the reactive current variation in the pixel group due to the change in magnetic susceptibility is provided.

It is envisaged that it will be possible to achieve depth discrimination of the object by varying the magnetic field intensity by means of varying the current in the magnetic elements. This will allow probing of the magnetostatic response to greater depths. Array saturation may need to be taken into account in regard to this aspect, however.

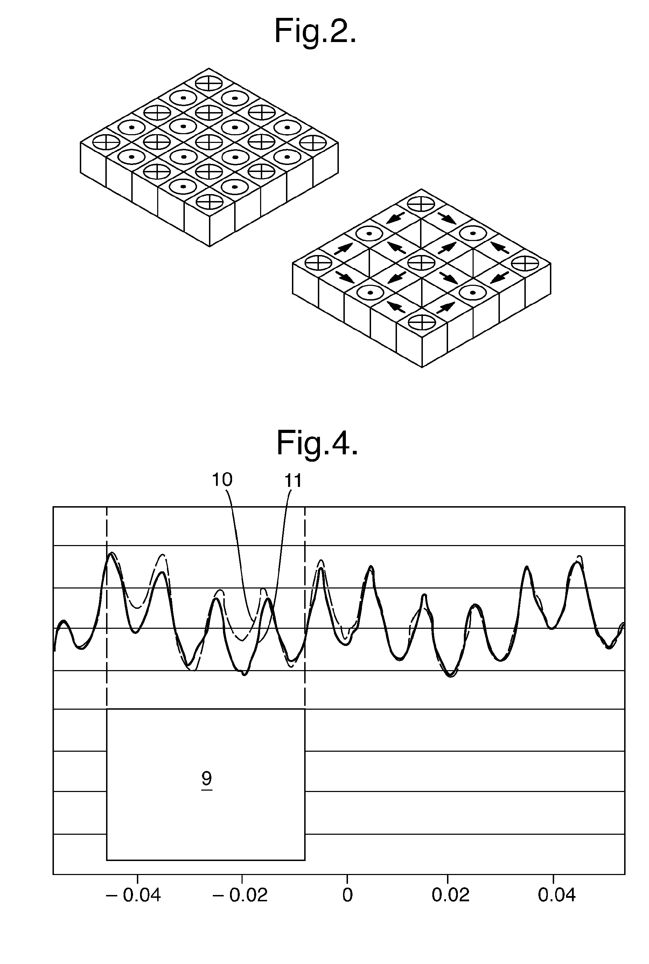

Figure 4 shows, between the dotted lines, computed difference in field strength due to the susceptibility change caused by to the presence of the square object 9. The lighter trace 10 represents the object 9 being present and the darker trace 11 represents the object's absence.

In a preferred embodiment of the invention an active pixelated Halbach array composed of elemental solenoids producing a magnetostatic field (more array elements = more pixels = greater resolution) is provided, with individual current measurement of each array element being possible. Measurement of variation of current change gives an indication of change in magnetic susceptibility and hence the location of a buried object.

Software may be provided to map the pixelated active Halbach array into a visual display to show a pixelated image of a buried object.

A penetrative magnetic field may also be provided by an array of loop antennas. The magnetic field of a loop antenna is dominant in the near field, so the antenna can act as a magnetic source and will also produce an electric field. The aspect ratio (ratio of diameter to height) of the loops and the windings (number and distribution of coils/wound wire) in the loops can be chosen to maximise the field efflux. Moreover, the frequency of the current driving the loops can be varied to optimise, or control, the penetration depth and maximise the interaction, i.e. the current induced in a buried object. The current induced in a metallic object would re-radiate an electromagnetic field to interact with the loop (solenoid), thereby enabling the same imaging as described above.

The apparatus may be magnetostatic. That is to say the magnetic fields produced by the solenoidal array may not vary with time. However, although it would be more difficult to deconvolve the signal returned due to the presence of an object, it is possible there will be some discriminatory advantage in varying the frequency of the source magnetic field. The elemental solenoids may vary in frequency or may be pulsed. If this were time varying then a current would be induced in any buried object. Perturbations to the source magnetic field emanating from the elemental solenoids in the array would manifest themselves as perturbations to the current. Thus the current variations in the individual solenoids due to the interaction of the magnetic field with a buried object can be measured

Torsional twist may be imparted to the magnetic field emanating from each elemental solenoid in the Halbach array. Based on the theory of flux tubes, this will enhance the persistence of the field and the discrimination of field between adjacent elemental solenoids. This will be especially so if the sense of rotation, or chirality, is changed. By this means the resolution of the overall array may be enhanced.

**Claims**

as herein described.

1. Imaging apparatus comprising an array of magnetic field inducing elements whereby the array produces a combined magnetic field resulting from a combination of the element fields, the combined magnetic field being projected from the apparatus into a space of a given magnetic susceptibility adjacent the apparatus, the apparatus including means to sense a change in magnetic susceptibility of the field induced by each element whereby to detect an object of differing magnetic susceptibility positioned in the combined magnetic field.

2. Apparatus as in claim 1 in which the array comprises a linear Halbach array.

3. Apparatus as in claim 1 in which the array comprises a two dimensional Halbach array.

4. Apparatus as in claim 1, 2 or 3 in which the elements comprise electromagnets and the means to sense the change in magnetic susceptibility of the field induced by each element comprises means to sense change in the current passing through each electromagnet.

5. Apparatus as in any preceding claim including means to combine the sensed changes in magnetic field susceptibility into a visual image representing the object.

6. Apparatus as in claim 5 in which the means to combine the sensed changes in magnetic field susceptibility into a visual image representing the object include means to represent the layout of the field inducing elements on a visual display.

7. Apparatus as in any preceding claim including means to vary the strength of magnetic field of each element whereby to vary at least one of the sensitivity of the apparatus and the distance from the apparatus at which the object is detected.

8. A method of detecting an object hidden within or behind a shield, the method including the steps of positioning apparatus according to any preceding claim adjacent the shield whereby to cause the combined magnetic field to penetrate the shield and encompass the object and sensing the change in magnetic susceptibility of the field induced by each element due to the presence of the object, whereby to detect the object.

9. Imaging apparatus substantially as herein described with reference to the accompanying drawings.

10. A method of detecting a hidden object substantially

Fig.1.

# Fig.2.

# Fig.4.

# Fig.3.

Fig.5.

Europäisches
Patentamt

European
Patent Office

Office européen
des brevets

# EUROPEAN SEARCH REPORT

Application Number

EP 11 27 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 666 834 A1 (ISIS INNOVATION [GB]) 7 June 2006 (2006-06-07) | 1,4,7,8 | INV. G01V3/10 |
| Y | * paragraphs [0001], [0087] - [0099], [0108] - [0112] * | 2,3,5,6 | |
| Y | WO 2011/006515 A1 (SKF B V [NL]; MOL HENDRIK ANNE [NL]) 20 January 2011 (2011-01-20) * page 11, line 4 - page 12, line 20; figures 3,4 * | 2,3 | |
| Y | US 2005/189938 A1 (SCHLEY WILLIAM R [US] ET AL) 1 September 2005 (2005-09-01) * paragraphs [0002], [0036], [0037]; figures 3,9 * | 5,6 | |
| A | US 6 326 791 B1 (BOSNAR MIRO [CA]) 4 December 2001 (2001-12-04) * the whole document * | 1-8 | |

TECHNICAL FIELDS
SEARCHED (IPC)

G01V
G01D

The present search report has been drawn up for all claims

| Place of search | Date of completion of the search | Examiner |
|---|---|---|
| The Hague | 9 February 2012 | Vollmer, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 27 5049

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2012

| Patent document cited in search report | | Publication date | Patent family member(s) | | Publication date |
|---|---|---|---|---|---|
| EP 1666834 | A1 | 07-06-2006 | EP<br>EP | 1666834 A1<br>1666835 A1 | 07-06-2006<br>07-06-2006 |
| WO 2011006515 | A1 | 20-01-2011 | NONE | | |
| US 2005189938 | A1 | 01-09-2005 | NONE | | |
| US 6326791 | B1 | 04-12-2001 | CA<br>US | 2308985 A1<br>6326791 B1 | 19-11-2000<br>04-12-2001 |

EPO FORM P0459

For more details about this annex : see Official Journal of the European Patent Office, No. 12/82